# FASCICULE DE BREVET EUROPEEN

(11) **EP 3 200 963 B1**
(45) Date de publication et mention de la délivrance du brevet: **01.09.2021**
(21) Numéro de dépôt: 15786993.4
(22) Date de dépôt: 16.09.2015
(51) Int. Cl.: B28B 23/00, G06K 19/077

(54) **ELÉMENT DE CONSTRUCTION INCORPORANT UN SYSTÈME ÉLECTRONIQUE ET SON PROCÉDÉ DE FABRICATION**
BAUELEMENT MIT EINEM ELEKTRONISCHEN SYSTEM UND VERFAHREN ZUR HERSTELLUNG DAVON
ELÉMENT DE CONSTRUCTION INCORPORANT UN SYSTÈME ÉLECTRONIQUE ET SON PROCÉDÉ DE FABRICATION

(30) Priorité: 02.10.2014 FR 1402219
(43) Date de publication de la demande: 09.08.2017
(73) Titulaire: Melet, Rolland, 83780 Flayosc (FR)
(72) Inventeur: Melet, Rolland, 83780 Flayosc (FR)
(74) Mandataire: Macquet, Christophe
(86) Numéro de dépôt international: PCT/FR2015/000183
(87) Numéro de publication internationale: WO 2016/051030

(56) Documents cités:
- JP-A- 2005 267 227
- JP-A- 2008 137 284
- US-A1- 2009 072 978
- US-A1- 2014 030 026

## Description

La présente invention concerne un élément de construction incorporant un système électronique ainsi que son procédé de fabrication. Par système électronique, il est entendu tout système électronique dont le positionnement dans l'élément de construction est important pour son bon fonctionnement. Il s'agit en particulier de systèmes électroniques émissifs sans contact sous forme d'une étiquette électronique du type RFID pour identification par radiofréquences, notamment du type RFID (identification par radiofréquences), NFC (communication dans un champ proche) de même que des systèmes utilisant des technologies selon le standard « Bluetooth » permettant l'échange bidirectionnel à très courte distance d'informations en utilisant des ondes radio UHF (Ultra hautes fréquences), notamment à énergie faible, par exemple celles connues sous la dénomination de BLE (Bluetooth énergie faible), ou alors, un tel système, relié par des organes de connexion notamment filaires à une surface quelconque de l'élément de construction pour une transmission de données. Il s'agit dans un exemple d'un capteur de différents paramètres internes ou externes à l'élément de construction, notamment de pression de mouvement, par accéléromètre ou de température.

Un tel système électronique permet notamment de capter des informations, de les mémoriser et de les restituer, par exemple à faible distance à un utilisateur grâce à la présence dans le système d'un élément qui émet par exemple des ondes radio.

Dans la majeure partie des modes de réalisation d'un tel système, celui-ci est sous la forme d'une étiquette ou d'un objet plat incorporant une puce, une antenne avec une couche autocollante de papier ou de vinyle pour son adhésion à l'élément de construction qui le porte. Dans une application préférentielle, l'élément de construction est un objet se trouvant dans l'espace public, des passants ou des moyens de locomotion étant susceptibles de passer à proximité de l'élément.

Un utilisateur est capable de communiquer avec un tel système émissif, par exemple, au moyen d'un terminal portatif, par exemple un téléphone portable dit intelligent (« smartphone » en langue anglaise) ou une tablette numérique équipé d'un lecteur du système émissif, par exemple d'un lecteur NFC si le système émissif est une étiquette NFC. Toujours dans le cas d'une étiquette NFC, l'antenne du système capte l'énergie radio émise par le terminal lorsque celui-ci passe à sa proximité. Cette énergie alimente la puce du système qui peut alors échanger des données avec le terminal.

Une application préférentielle et non limitative d'un tel système électronique, par exemple un système électronique émissif sans contact et à portée réduite incorporé dans un élément de construction, est dans l'émission de diverses informations par cet élément remplissant alors le rôle d'un élément de mobilier urbain intelligent dédié à l'information des utilisateurs en délivrant des informations en correspondance avec le positionnement de l'élément de construction.

Pour ce faire, le système électronique devrait être incorporé directement dans la matière de l'élément de construction. Cela pose un certain nombre de difficultés tant dans la mise en œuvre de cette incorporation que dans le positionnement et le repérage futur du système.

En effet, le positionnement d'un système électronique, par exemple un système émissif sans contact et à portée réduite, sur un élément de construction se trouvant dans l'espace public demande de répondre à plusieurs prérequis de localisation, robustesse et positionnement pour être réellement efficient.

En ce qui concerne la localisation, en prenant comme exemple un système électronique émissif sous forme d'une étiquette RFID, plus particulièrement une étiquette NFC, la puce RFID ou NFC est à apte à communiquer avec un terminal porté par un utilisateur, par exemple un téléphone portable, à une distance réduite appelée champ proche qui est inférieure à environ 10 cm à l'air libre. Cette distance est bien plus réduite si les ondes radio traversent un matériau solide, ce qui est le cas lorsque l'étiquette est incorporée à l'intérieur de l'élément de construction.

La condition de maintien d'un champ proche en dessous d'une valeur maximale de distance entre le système émissif et le terminal impose à l'utilisateur cherchant à mettre en relation le terminal et le système émissif de connaître l'emplacement de manière précise l'emplacement de ce système dans l'élément de construction de façon à positionner au plus près son terminal du système.

Comme l'utilisateur peut utiliser, en tant que terminal, un téléphone portable apte à recevoir les émissions du système, il convient de garder à l'esprit que celui-ci n'a pas reçu une formation particulière pour lui permettre d'optimiser l'échange d'informations avec le système. Il est donc nécessaire de rendre l'action de mise en relation du terminal la plus simple possible et la plus évidente possible pour l'utilisateur.

Cela passe par une mise en évidence de la localisation précise de l'emplacement du système électronique émissif, ce qui peut se matérialiser par la création d'un signe de repérage visible à la surface de l'élément de construction contenant ou supportant le système émissif.

En ce qui concerne la robustesse, un tel système électronique de faible encombrement, notamment quand il est sous la forme d'une étiquette, est par nature fragile. Or, l'espace public nécessite des éléments et objets robustes ou du moins raisonnablement peu sensibles aux agressions qu'elles soient atmosphériques, comme la pluie, la chaleur, le froid, issues d'un usage régulier comme les frottements ou la pression, plus ou moins volontaires, comme chocs ou accrochages ou enfin malveillantes lors d'actes de vandalisme comme coups, grattages, arrachages, etc. Il est donc important que le système électronique émissif soit protégé de la façon la plus robuste possible.

De plus, pour que le système émissif soit le plus opérationnel possible, il faut non seulement que celui-ci soit robuste, mais aussi que la relation avec son support, par exemple un élément de construction ou un support intermédiaire, soit robuste. En effet, plus qu'une extrême robustesse du système lui-même, ce qui importe c'est que le système soit au même niveau de robustesse que l'élément qui le supporte, et que l'ensemble ainsi formé soit cohérent et homogène du point de vue de la robustesse.

En ce qui concerne les conditions de positionnement du système, celles-ci sont directement liées aux choix techniques faits pour répondre aux contraintes de localisation et de robustesse. La majeure contrainte de positionnement est de garantir qu'une mise en relation terminal/système soit la plus efficace possible, même au travers de matériaux radio-opaques.

Il a été proposé de placer le système électronique émissif derrière un film protecteur sur l'élément de construction le portant. Ceci implique que le système électronique est de faible épaisseur, ce qui peut ne pas toujours être le cas. Le film peut être transparent ou non. Si le film est transparent, cela permet de localiser parfaitement le système par l'utilisateur portant le terminal et s'il ne l'est pas, c'est la forme du même du film qui peut permettre de localiser le système.

Premièrement, l'utilisation d'un tel film ne donne pas d'informations sur la fonction du système. Deuxièmement, cette proposition n'assure pas une protection suffisante du système et ne répond pas au critère de robustesse exigé. En effet, si le film de protection du système est accessible ou exposé à des chocs, il peut être altéré. Même si un écran de protection est prévu pour le film, il faut que celui-ci soit transparent ou localise la présence du système et ne soit pas radio-opaque. Dans tous les cas, la tenue du système est liée à la tenue du moyen d'adhésion du film de protection sur l'élément de construction, le plus souvent de la colle. Cette première proposition n'est donc pas satisfaisante.

Par ailleurs, il a été proposé de placer le système électronique émissif dans une structure autocollante sur l'élément de construction, cette structure autocollante en film plastique encadrant le système. Au moins une face de la structure peut indiquer la présence du système par impression ou toute autre technique équivalente de marquage sur support mince.

Concernant la localisation ou le repérage du système électronique, les mêmes avantages sont obtenus que pour la technique précédente avec film protecteur. Concernant la robustesse ou la résistance, cette deuxième proposition présente les mêmes inconvénients que la proposition précédente. Bien que permettant une localisation facilitée du système, cette deuxième proposition ne convient pas en ce qui concerne le critère de robustesse.

Enfin, pour répondre à une protection efficace du système électronique, il a été proposé de l'incorporer dans une structure protectrice et de le fixer à la surface ou dans une réservation pratiquée dans l'élément de construction.

Du point de vue de la localisation, la structure protectrice est visible sur le support ou dans la réservation. De plus, un marquage de la structure protectrice peut améliorer significativement la localisation du système électronique émissif. Cependant, en ce qui concerne la robustesse ou la résistance mécanique de la structure, même en partant du principe que la structure protectrice est correctement conçue pour résister à toutes les agressions atmosphériques, cette structure restera, comme toutes pièces rapportées, exposée à certaines agressions involontaires et aux actes malveillants, comme des tentatives de démontage. Cette troisième proposition n'est donc pas non plus satisfaisante.

De plus, pour cette troisième proposition, le placement du système dans un mode encapsulé à l'intérieur d'une réservation pratiquée dans l'élément de construction le supportant nécessite une mise en œuvre très soigneuse et particulière, impliquant un usinage ou un moulage fin de la réservation dans la surface de l'objet support, puis un moulage et une réalisation très précise de la structure protectrice, de sorte que l'inclusion de l'un dans l'autre soit correctement ajustée. Cela demande un haut niveau de précision qui accroît le coût de fabrication de l'ensemble élément de construction avec système électronique émissif.

Le document US 2014/030026 A1 décrit un ensemble selon le préambule de la revendication 1 et un procédé de fabrication par moulage d'un élément de construction.

Le document US 2009/072978A A1 décrit un ensemble destiné à être incorporé dans un élément de construction solidifié et un procédé de fabrication par moulage d'un élément de construction.

Le document EP-A-1 909 218 décrit un module de béton dans lequel sont incorporées une ou plusieurs étiquettes RFID contenant des informations sur des paramètres relatifs au béton. Ce document ne décrit cependant aucun moyen de localisation de l'étiquette RFID dans le module, ni aucun moyen de protection de l'étiquette lors de la fabrication du module. De plus, l'étiquette RFID ne sert qu'à l'information sur des paramètres relatifs au béton transmis à un terminal utilisé par un homme de métier. Il s'ensuit qu'une telle étiquette RFID ainsi incorporée dans un module de béton ne peut pas remplir un rôle d'émissions d'informations pour des utilisateurs qui ne sont pas forcément des spécialistes de la lecture de telles étiquettes, étant donné que cela nécessiterait que l'étiquette soit facilement localisée par les utilisateurs voulant entrer en échange avec elle, ce qui ne peut être le cas avec les étiquettes ainsi positionnées dans le module décrites dans ce document.

Le document FR-A-2 977 583 décrit un procédé de fabrication d'une composition hydraulique comprenant les étapes de mélange d'un liant hydraulique et d'eau pour former un mélange à l'état frais comprenant des étiquettes d'identification radiofréquence, ces étiquettes comprenant des informations relatives à un futur ajout d'eau et/ou d'adjuvant au mélange afin d'obtenir un béton avec des propriétés rhéologiques ou une résistance mécanique particulières. Dans ce document, comme pour le précédent, les modes de positionnement, de protection et de localisation ou repérage des étiquettes ne sont pas abordés car non cruciaux pour l'emploi souhaité comme décrit dans ce document.

Le problème à la base de la présente invention est de munir de manière simple et pratique un élément de construction d'au moins un système électronique émissif assurant une communication avec un ou des terminaux pouvant se trouver à l'extérieur au voisinage de l'élément de construction, le système électronique devant être positionné de manière robuste sur cet élément de construction tout en lui permettant d'émettre de manière satisfaisante vers le ou les terminaux et d'être facilement repérable de l'extérieur.

A cet effet, on prévoit, selon l'invention, un ensemble destiné à être incorporé dans un élément de construction solidifié selon la revendication 1 et un procédé de fabrication par moulage d'un élément de construction selon la revendication 11.

L'effet technique ainsi obtenu est de pouvoir remplir des exigences contradictoires tout en gardant une mise en œuvre du système émissif simple et pratique.

La première exigence que remplit l'ensemble est de présenter une facilité et une sûreté de montage lors de la fabrication de l'élément de construction. Le système électronique, qui peut être de petite taille et de conception fragile, est supporté par une pièce support avantageusement de plus grandes dimensions donc d'un positionnement plus sûr dans l'élément de construction lors de la fabrication de cet élément, d'autant plus que la pièce support est aussi alors maintenue par rapport au moule Le système électronique est maintenu par rapport à la pièce support dans trois directions, l'élément de positionnement tout en étant protégé par celle-ci. Cela évite tout risque de glissement du système lors de la fabrication de l'élément de construction, par exemple son enfoncement dans l'élément de construction conduisant ultérieurement à une émission affaiblie des ondes par le système, lorsque le système électronique est un système électronique émissif sans contact et à portée réduite.

La deuxième exigence que remplit l'ensemble est de protéger efficacement le système électronique. Ceci est obtenu par la pièce support qui maintient par l'élément de positionnement et protège par la surface de réception le système électronique. La pièce support et son système sont incorporés dans l'élément de construction d'où une protection optimale du système contre toutes sortes d'agressions extérieures. Avantageusement, un dispositif de maintien, par exemple une couche d'adhésif, contribue aussi temporairement à la protection de la pièce support et de son système élecronique lors de la fabrication de l'élément de construction en servant d'opercule de protection et/ou d'étanchéité entre le moule et la pièce support.

La troisième exigence que remplit l'ensemble est une localisation aisée du système électronique. Ceci est obtenu du fait que la pièce support comprend sur la face opposée à la face de réception, un dispositif de maintien, par exemple et de façon non limitative une couche d'adhésif, qui permet le permet le positionnement temporaire de l'ensemble lors de la fabrication de l'élément de construction. Ainsi, la face opposée à la face de réception pour le système électronique de la pièce support est affleurante à la surface de l'élément de construction en ayant été plaquée temporairement à la surface du moule. Ce dispositif de maintien couplé à l'élément support permet également d'assurer de façon fiable la position du système électronique dans l'élément de construction.. Ce qui permet notamment que, dans le cas d'un système électronique émissif, peu de matière de l'élément de construction, qui correspond sensiblement à l'épaisseur de la pièce support, se trouve entre le système électronique émissif et le terminal disposé à l'extérieur de l'élément qui capte les ondes émises par le système d'où une transmission optimale des ondes entre le système et le terminal.

Compte tenu du fait que la face opposée à la face de réception de la pièce support positionnée affleurante de l'élément de construction, et du fait de sa solidarisation temporaire avec la paroi du moule, l'ensemble est aisément visible de l'extérieur par un ou des utilisateurs potentiels portant un ou des terminaux, ce qui facilite son repérage et le positionnement du ou des terminaux pour une réception des ondes émises la meilleure possible, lorsque le système est un système émissif sans contact à portée réduite.

De manière facultative, l'invention comprend en outre au moins l'une quelconque des caractéristiques suivantes :
- le système électronique est un système électronique émissif sans contact et à portée réduite comprenant en outre une antenne d'émission d'ondes radio. La face de réception comporte au moins une surface d'appui sur laquelle repose le système électronique. La pièce support a pour but d'assurer un positionnement efficace et durable du système électronique qui doit être maintenue notamment lors de la fabrication de l'élément de construction tout en assurant sa protection. L'utilisation d'une surface d'appui renforce le rôle de maintien du système sur la pièce support, en complément du rôle de maintien aussi effectué par l'élément de positionnement.
- ladite au moins une surface d'appui est portée par une patte faisant saillie de la face de réception en comprenant un bord relevé venant en butée contre une portion de la périphérie du système électronique émissif. Le bord relevé et notamment la présence de bords relevés entourant le système empêche tout mouvement latéral ou radial du système par rapport à la pièce support et concourt au maintien du système par rapport à la pièce support.
- la face de réception comporte plusieurs surfaces d'appui sur lesquelles repose une portion respective du système émissif, l'élément de positionnement se trouvant à égale distance des surfaces d'appui. L'élément de positionnement est ainsi placé en correspondance avec le centre du système et des portions périphériques du système sont en appui sur les surfaces d'appui de la pièce support, ce qui assure son maintien et sa stabilité.
- l'élément de positionnement est un élément de centrage sous la forme d'un doigt pénétrant dans un logement disposé au milieu du système électronique, un support auxiliaire sur lequel repose la face inférieure du système électronique émissif étant prévu à la base du doigt. Cela empêche tout mouvement radial du système électronique émissif par rapport à la pièce support et permet un meilleur support du système électronique sur la pièce support du fait du support auxiliaire.
- la pièce support présente au moins un élément d'ancrage faisant saillie de la pièce support et destiné à s'insérer à l'intérieur de l'élément de construction le plus profondément de l'ensemble. Cela assure le positionnement durable de l'ensemble système et pièce à l'intérieur de l'élément de construction. Le dispositif de maintien permet de maintenir la pièce support dans le moule avant et pendant le coulage/moulage, c'est-à-dire lors de la fabrication de l'élément de construction,, la matière de l'élément n'étant pas encore rigide et l'ensemble étant susceptible de se déplacer dans l'élément sous l'effet de la coulée de matière.
- la pièce support comporte des évidements la traversant de la face de réception à sa face opposée. Selon l'invention, la matière coulée va traverser la pièce support et la maintenir fermement lors de sa rigidification.
- les évidements forment une structure qui peut être alvéolaire. Ces formes d'évidement permettent que la pièce support ne soit soumise à des efforts lors de la coulée de matière pour la fabrication de l'élément de construction qui puissent être susceptibles de modifier son positionnement. La forme alvéolaire permet de rigidifier la structure et de laisser la matière de là l'élément de construction s'écouler au travers du support.
- le dispositif de maintien peut être une couche d'adhésif double face avec un côté de la couche adhérant à la face opposée à la face de réception et l'autre côté de la couche étant destiné au positionnement temporaire de l'ensemble lors de la fabrication de l'élément de construction. Une telle couche d'adhésif double face permet un détachement facilité en éloignement du moule de la première face de la couche tandis que la seconde face est encore solidarisée avec la pièce de support. D'autre part, ceci permet un détachement facilité de la seconde face de la couche en éloignement de la pièce support.
- le côté de la couche adhérant à la face opposée à la face de réception sert d'opercule d'étanchéité et de protection à la face opposée.
- la face opposée à la face de réception de la pièce support porte un signe distinctif de repérage et de caractérisation du système électronique. Il est en effet très avantageux que la pièce support et le système électronique soient aisément repérables par un ou des utilisateurs munis d'un terminal se trouvant au voisinage de l'élément de construction. Grâce à la présence d'un tel signe distinctif, l'utilisateur peut repérer facilement le système et ainsi trouver une position favorable à la réception des ondes émises par le système, lorsque celui-ci est un système électronique émissif, la localisation précise du système électronique étant indiquée par le signe distinctif.
- le système électronique est un système électronique émissif, qui est une étiquette NFC ou étiquette radiofréquences de communication dans un champ proche. Une telle étiquette NFC est suffisante pour l'émission d'ondes à faible portée et particulièrement bien adaptée pour la communication aVec un terminal sous la forme d'un téléphone portable d'un utilisateur. La technologie mise en œuvre est simple et intuitive et permet d'utiliser un téléphone portable à des fins innovantes en ne requérant seulement que le placement du téléphone à proximité du système électronique émissif avec lequel l'utilisateur veut interagir, ceci sans avoir besoin de lancer une application dans le téléphone.

Selon un autre objet de la présente invention, on prévoit un élément de construction à base d'une matière moulée se solidifiant progressivement lors de sa fabrication, caractérisé en ce qu'il incorpore en son intérieur au moins un tel ensemble, la face opposée à la face de réception dudit au moins un ensemble étant visible de l'extérieur de l'élément de construction. Un tel élément de construction trouve une application particulièrement intéressante comme mobilier urbain intelligent capable d'interagir avec le terminal respectif d'un ou de plusieurs utilisateurs se trouvant à proximité.

Avantageusement, la matière moulée est choisie parmi les matières suivantes ou est un mélange des matières suivantes ; béton de ciment avec ou sans ajout de matériau végétal, béton de résine, béton hydraulique, une résine, un plastique ou un mélange de plastiques. Dans d'autres modes de réalisation, on peut avoir un façonnage, une projection, une impression en trois dimensions.

Dans le cadre de l'invention, on prévoit un procédé de fabrication par moulage d'un élément de construction selon la revendication 11.

D'autres caractéristiques, buts et avantages de la présente invention apparaîtront à la lecture de la description détaillée qui va suivre et au regard des dessins annexés donnés à titre d'exemples non limitatifs et sur lesquels :

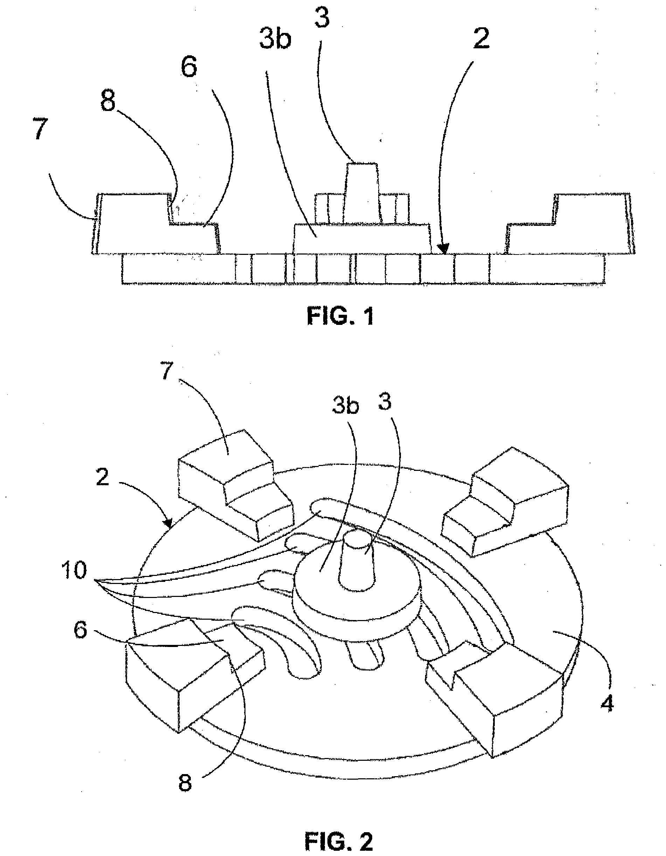

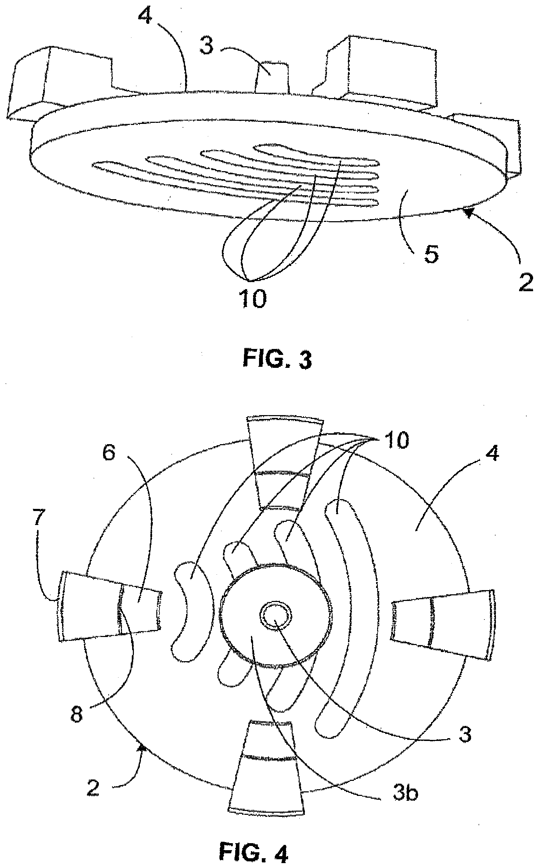

- les figures 1 à 4 sont des représentations schématiques respectivement d'une vue latérale, d'une vue en perspective de dessus, d'une vue de dessus et d'une vue en perspective de dessous d'un mode de réalisation d'une pièce support faisant partie d'un ensemble selon la présente invention, le système électronique émissif faisant aussi partie d'un tel ensemble n'étant pas montré à ces figures,

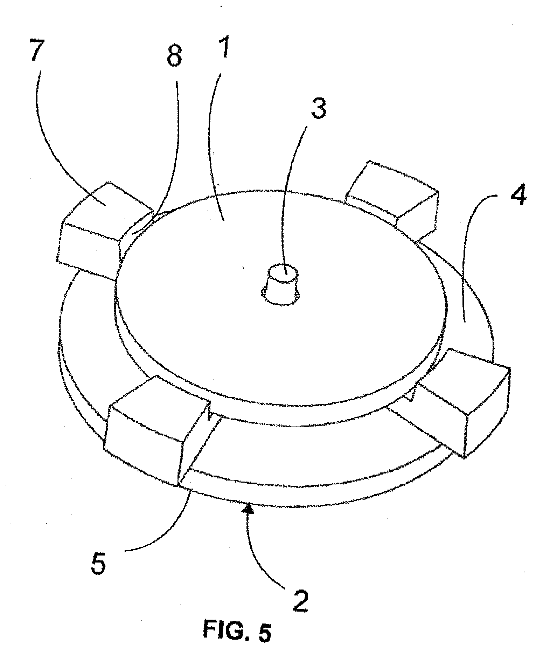

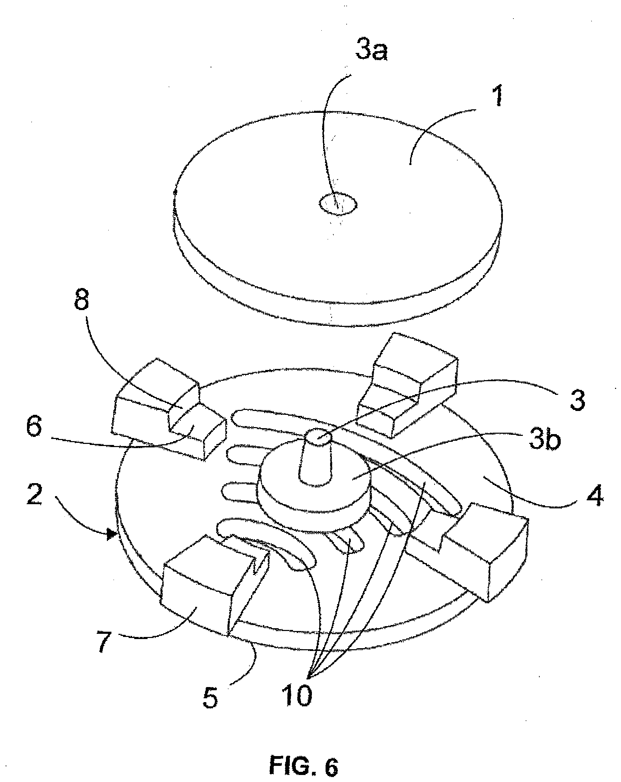

- les figures 5 et 6 sont des représentations schématiques d'un ensemble formé par un système électronique émissif et une pièce support selon le mode de réalisation montré aux figures 1 à 4, le système électronique émissif étant montré positionné sur la pièce support à la figure 5, tandis qu'il est montré à distance de la pièce support à la figure 6,

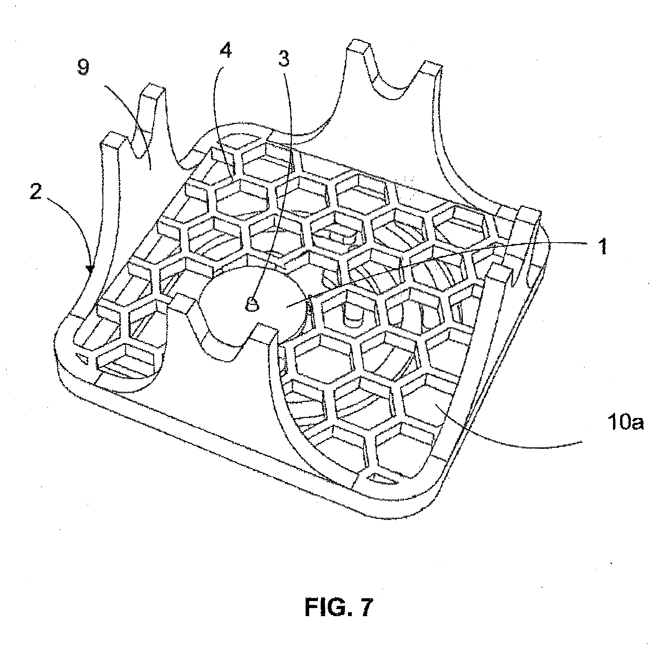

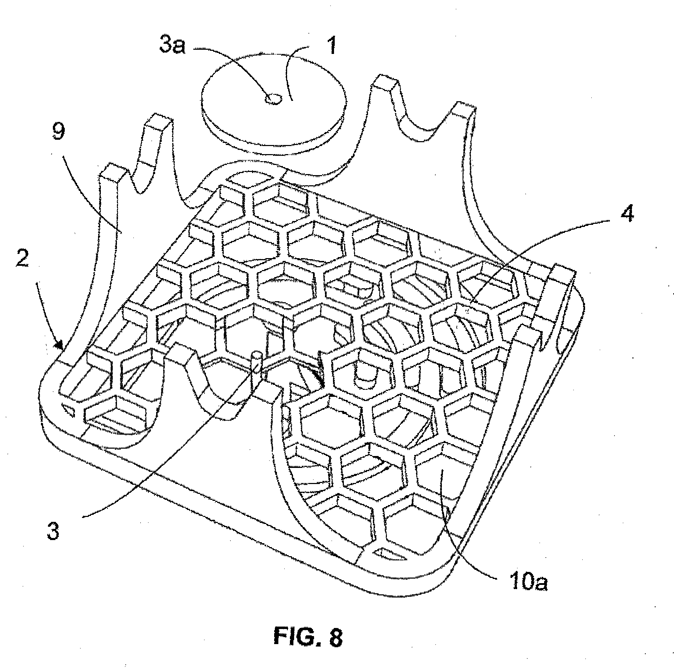

- les figures 7 à 9 sont des représentations schématiques d'une vue en perspective de dessus avec respectivement le système électronique émissif positionné et non positionné sur la pièce support et d'une vue en perspective de dessous d'un ensemble selon un autre mode de réalisation conforme à la présente invention.

Dans ce qui va suivre, un système électronique émissif sans contact et à portée réduite désigne tout système capable d'envoyer des informations, ce système comprenant préférentiellement une puce et une antenne d'émission d'ondes radio. Le système émissif peut aussi travailler en émission et en réception, ce qui procure l'avantage de pouvoir réactualiser les informations du système. Si une étiquette RFID et plus précisément une étiquette NFC est préférée, ceci n'est cependant pas limitatif et le système électronique émissif peut être autre que de telles étiquettes. Par exemple, il peut être utilisé des systèmes émissifs tels que balises BLE, dont la localisation précise est plus une question d'émission que de localisation de la part de l'utilisateur.

L'élément de construction contenant au moins un tel système électronique émissif peut servir avantageusement en tant que mobilier urbain intelligent pouvant émettre diverses informations en direction d'un ou dé plusieurs terminaux, préférentiellement un téléphone portable d'un ou de plusieurs utilisateurs. L'application peut également permettre la réalisation d'interfaces objet/machine/information/service robuste tel que par exemple l'insertion dans un mur d'une étiquette NFC qui sera reliée au déclenchement d'une serrure d'une porte. Par ailleurs, le système émissif peut comprendre un capteur de différents paramètres tels que la température, la pression, l'accélération ou la vibration.

L'application de la présente invention peut cependant être élargie à toute utilisation de systèmes électroniques émissifs utilisés par des opérateurs qualifiés avec des terminaux qui ne sont pas des téléphones portables.

Ainsi, le système électronique émissif peut aussi servir à donner des informations sur l'élément de construction l'incorporant, par exemple ses conditions et sa date de fabrication de même que la matière le composant. L'utilisation du système électronique émissif faisant partie de l'élément de construction selon l'invention n'est donc pas réduite à une utilisation dans un mobilier urbain intelligent.

En se référant à toutes les figures, la présente invention concerne un ensemble comprenant principalement un système électronique émissif 1 sans contact et à portée réduite. Cet ensemble est destiné à être incorporé dans l'intérieur d'un élément de construction, ceci lors de sa fabrication.

De manière connue, le système émissif 1 comprend une puce et une antenne d'émission d'ondes radio en pouvant être par exemple une étiquette RFID ou NFC. Il peut aussi travailler en réception et recevoir des informations.

Selon la présente invention, l'ensemble comprend aussi une pièce support 2 pour la réception du système émissif. La pièce support 2 comprend un élément de positionnement 3 pour le maintien avantageusement dans au moins deux directions du système électronique émissif 1 par rapport à la pièce support 2. L'élément de positionnement 3 peut pénétrer dans le système émissif 1 pour réaliser son indexation par rapport à la pièce support 2. Cette pièce support 2 présente une face de réception du système émissif 1, cette face étant appelée ci-après face de réception 4.

La pièce support 2 comprend en outre sur la face opposée 5 à la face de réception 4 un dispositif de maintien, par exemple une couche d'adhésif, destinée au positionnement temporaire de l'ensemble lors de la fabrication de l'élément de construction. Ce dispositif de maintien est destiné à permettre le maintien de l'élément de construction muni d'au moins un tel ensemble avec un système électronique émissif 1 et une pièce support 2 à la paroi du moule servant à la fabrication.

Dans un mode de réalisation de l'invention, le dispositif de maintien est une couche d'adhésif notamment un couche d'adhésif double-face. Néanmoins, ce dispositif est un dispositif parmi d'autres. Dans d'autres exemples, il peut s'agit d'une ventouse, d'un dispositif fonctionnant par vissage, d'un aimant, ou de tous autres dispositifs de maintien.

La fabrication de l'élément de construction se fait par moulage de l'élément dans le moule. Ainsi, une face 5 de l'ensemble est maintenue à la surface de l'élément de construction lors de sa fabrication tout en garantissant que le reste de l'ensemble est encapsulé dans la matière formant l'élément de construction après rigidification de la matière.

L'élément de construction est donc à base d'une matière coulée ou moulée se solidifiant progressivement lors de sa fabrication et incorpore en son intérieur au moins un tel ensemble du système émissif 1 avec sa pièce support 2. Après fabrication, comme la face opposée 5 à la face de réception 4 de la pièce support 2 a adhéré par le dispositif de maintien à une paroi du moule, cette face opposée 5 dudit au moins un ensemble est visible de l'extérieur de l'élément de construction.

Avantageusement, la matière moulée est choisie parmi les matières suivantes ou est un mélange des matières suivantes : béton de ciment avec ou sans ajout de matériau végétal, béton de résine, béton hydraulique, une résine, un plastique ou un mélange de plastiques.

Ceci n'est pas limitatif et d'une manière générale, la matière de l'élément de construction peut être toute matière, homogène ou hétérogène se solidifiant par divers processus (action du temps, de la température ou par réaction chimique, etc...) pour former un ensemble cohérent, plus ou moins rigide.

Ainsi, selon l'invention, un procédé de fabrication par moulage d'un élément de construction comprend les étapes de la revendication 11.

Le dispositif de maintien utilisé est suffisamment résistant pour maintenir en place la pièce support 2 lors de la fabrication de l'élément de construction tout en étant aisément détachable lors du démoulage de l'élément de construction. Il s'agit par exemple d'un adhésif double face, ou de tout autre moyen, par exemple, une ventouse, dispositif à vis, un aimant, soit tout dispositif du moment qu'il permet de maintenir la pièce support.

Quand le dispositif de maintien est une couche d'adhésif double face, ce qui sera ultérieurement plus précisément décrit, la face de la couche adhérant au moule est détachée en premier puis la face de la couche adhérant à la face opposée 5 de la pièce support 2 est détachée. Cependant, cet ordre est aléatoire.

Lors de la fabrication, il peut être procédé à une étape de vibration de la matière non encore solidifiée afin de s'assurer de sa bonne répartition, notamment dans des évidements prévus sur la pièce support 2, comme il sera vu ultérieurement.

Le système électronique émissif 1 est donc positionné sur une pièce support 2 à l'aide d'au moins un élément de positionnement 3 et forme un ensemble qui sera surmoulé par la matière de l'élément de construction.

Il est possible aussi d'effectuer un encapsulage de protection du système électronique émissif 1 préalablement à son positionnement sur la pièce support 2 Ceci peut être souhaitable quand le système électronique émissif 1 est fragile en étant par exemple une étiquette RFID ou NFC. Il est aussi possible d'encapsuler l'ensemble système électronique émissif 1 et pièce support 2 avant son introduction dans le moule de l'élément de construction.

Un tel ensemble système électronique émissif 1 et pièce support 2 est indémontable de l'élément de construction ainsi coulé, ce qui le rend très résistant aux agressions extérieures.

Pour les deux modes de réalisation illustrés aux figures, la face de réception 4 de la pièce support 2 est sensiblement plane afin de recevoir au mieux le système électronique émissif 1. Cette face de réception 4 de la pièce support 2 peut comporter au moins une surface d'appui 6 sur laquelle repose le système électronique émissif 1.

Aux figures, il est prévu quatre surfaces d'appui 6 régulièrement réparties autour de la circonférence d'un cercle correspondant à la périphérie du système électronique émissif 1 sous la forme d'une couronne, ce qui n'est pas limitatif. Chaque surface d'appui 6 est portée par une patte 7 faisant saillie de la face de réception 4. Chaque patte 7 présente en outre un bord relevé 8 venant en butée contre une portion de la périphérie du système électronique émissif 1, aux figures la tranche de la couronne formée par ce système électronique émissif 1.

Aux figures, seule une des quatre pattes est référencée 7. Il en va de même pour le bord relevé 8 et la surface d'appui 6. Ce qui a été énoncé précédemment pour les éléments référencés reste valable pour respectivement toutes les pattes, tous les bords relevés ou toutes les surfaces d'appui.

Ainsi, le système électronique émissif 1 est en appui sur les surfaces d'appui 6 et maintenues radialement par le bord relevé 8 de chaque patte 7 portant une surface d'appui 6 respective. Les bords relevés 8 coopèrent avec l'élément de positionnement 3 pour le maintien radial du système électronique émissif 1 sur la pièce support 2.

Dans les modes de réalisation illustrés aux figures, la face de réception 4 de la pièce support 2 comporte donc plusieurs surfaces d'appui 6 sur lesquelles repose une portion respective du système émissif 1, l'élément de positionnement 3 se trouvant à égale distance des surfaces d'appui 6. Les surfaces d'appui 6 et l'élément de positionnement 3 permettent de définir parfaitement la position du système électronique d'émission 1 par rapport à la pièce support 2. Aux figures, l'élément de positionnement 3 se trouve au milieu du cercle délimité par les pattes 7 et leur bord relevé 8.

Dans les modes de réalisation illustrés aux figures, l'élément de positionnement 3 est un élément de centrage sous la forme d'un doigt pénétrant dans un logement 3a disposé au milieu du système électronique émissif 1. Le maintien du système électronique émissif 1 se fait donc au milieu du système par l'élément de centrage 3 ainsi qu'à la périphérie du système 1, cela par les bords relevés 8 des pattes 7.

Avantageusement la base du doigt servant d'élément de centrage 3 comprend un support auxiliaire 3b sur lequel repose la face inférieure du système électronique émissif 1, ce qui contribue au maintien du système émissif 1 sur la face de réception 4 de la pièce support 2 en complément de la ou des surfaces d'appui 6.

La géométrie de la pièce support 2 permet de maîtriser la position du système électronique émissif 1 par rapport à la face de l'élément de construction sur laquelle affleure la face opposée 5 de la pièce support 2. Par exemple, comme la pièce support 2 supporte le système électronique émissif 1 de l'autre côté de la face opposée 5, l'épaisseur de la pièce support 2 est à calculer pour présenter une résistance suffisante pour la protection du système électronique émissif 1 tout en restant suffisamment mince pour ne pas trop éloigner le système électronique émissif 1 de la face de l'élément de construction afin que l'émission des ondes vers l'extérieur se fasse de manière satisfaisante.

Pour ordre d'idée, sans que cela soit limitatif, la distance du système électronique émissif 1 de la face la plus proche de l'élément de construction peut être comprise entre 1mm, distance suffisante pour une protection minimale du système, et 8mm, distance permettant encore une émission des ondes à travers l'élément de construction pouvant être correctement reçue par le terminal d'un utilisateur à l'extérieur.

De plus, la forme de la pièce support 2 permet avantageusement l'ancrage de celle-ci dans la matière de l'élément de construction lors de sa fabrication.

Pour ce faire, il peut être prévu plusieurs moyens d'ancrage qui peuvent être utilisés unitairement ou en combinaison. Par exemple, il peut être prévu sur la pièce support 2 au moins un élément d'ancrage 9 faisant saillie de la pièce support 2 et destiné à s'insérer à l'intérieur de l'élément de construction le plus profondément de l'ensemble. Aux figures, il est représenté quatre éléments d'ancrage 9 par pièce support 2 dont un seul est référencé, ce qui n'est pas limitatif.

Un tel élément d'ancrage 9 peut présenter une extrémité libre pouvant se crocheter avec des éléments de renforcement prévus dans la matière de l'élément de construction, par exemple du ferraillage quand la matière principale de l'élément de construction est du béton. Ainsi, l'extrémité libre d'un tel élément d'ancrage 9 peut présenter un cran correspondant au diamètre de l'élément de renforcement de la matière de l'élément de construction. Ce cran sert à l'introduction d'une portion de l'élément de renforcement pour que l'élément d'ancrage 9 soit en prise avec l'élément de renforcement.

Selon l'invention, la pièce support 2 comporte des évidements 10, 10a la traversant de la face de réception 4 à sa face opposée 5. Les évidements 10, 10a sont destinés à être traversés et remplis par de la matière coulée formant l'élément de construction quand sensiblement rigidifiée. Ainsi, lors du processus de rigidification de la matière, la pièce support 2 et le système électronique émissif 1 sont progressivement fermement maintenus en place dans l'élément de construction.

Aux figures 7 à 9, les évidements forment une structure alvéolaire 10a.

Comme précédemment indiqué, il est utilisé un dispositif de maintien destiné au positionnement temporaire de l'ensemble lors de la fabrication de l'élément de construction. Par exemple, le dispositif de maintien est une couche d'adhésif double face, avantageusement sous la forme d'un film double face. Un côté de la couche peut adhérer à la face opposée 5 à la face de réception 4 et l'autre côté de la couche peut être destinée au positionnement temporaire dé l'ensemble lors de la fabrication de l'élément de construction et donc adhérer à la paroi du moule de fabrication de l'élément de construction.

Le côté de la couché adhérant à la face opposée 5 à la face de réception 4 de la pièce support 2 sert d'opercule d'étanchéité et de protection à la face opposée 5 qui peut présenter un signe distinctif, comme il sera ultérieurement détaillé.

La couche d'adhésif double face, placée sur la face opposée 5 de la pièce support 2 joue ainsi ici à la fois un rôle d'élément de fixation de la pièce support 2 sur le moule et d'opercule d'étanchéité.

Dans un mode de réalisation alternatif, la pièce support 2 peut être plaquée contre la paroi du moule autrement que par un adhésif, par exemple par pression ou traction, la couche d'adhésif pouvant alors jouer principalement le rôle d'opercule d'étanchéité.

Comme précédemment mentionné, la face opposée 5 à la face de réception 4 de la pièce support 2 est la face visible de l'extérieur de l'ensemble système électronique émissif 1 et pièce support 2 et de l'élément de construction comprenant ledit ensemble. Cette face opposée affleure à la surface de l'élément de construction.

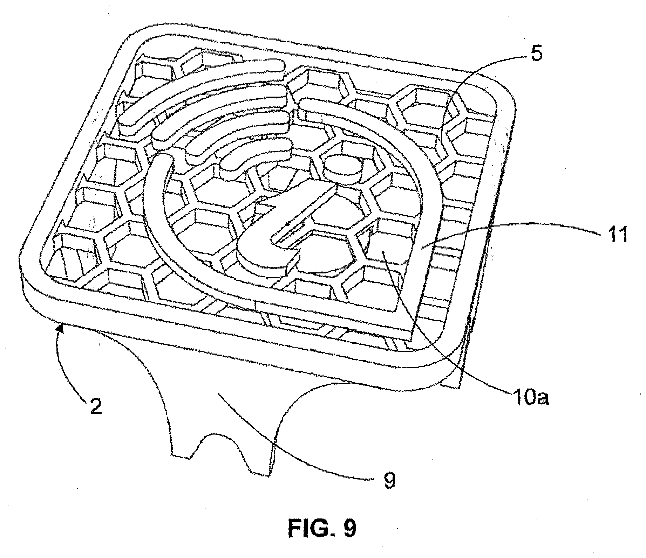

Il convient que cette face opposée 5 permette la visualisation d'indications telles que la présence du système émissif 1. Cette face opposée 5 porte de ce fait un signe distinctif de repérage et de caractérisation 11 du système électronique émissif 1. Ce signe de repérage, ou cible, est visible de l'extérieur de l'élément de construction. A la figure 9, ce signe de repérage prend la forme du logo officiel des dispositifs NFC. Seul ce signe est visible à la surface de l'élément de construction. Il est connu et donc repérable par les utilisateurs. Les alvéoles sont noyées dans le bloc.

Il peut être intéressant pour l'utilisateur que la face opposée et notamment le signe distinctif de repérage et de caractérisation 11 puisse également donner une indication sur la nature des informations visualisées, et/ou des services offerts suite à la mise en relation d'un terminal et du système électronique d'émission 1.

## Revendications

1. Ensemble destiné à être incorporé dans un élément de construction solidifié, ledit ensemble comprenant, d'une part, un système électronique (1), ledit système (1) comprenant une puce, ledit ensemble comprenant, d'autre part, une pièce support (2) munie, sur une (4) de ses faces dite de réception du système (1), d'un élément de positionnement (3) dudit système (1), et, à la face opposée (5) à ladite face de réception (4), d'un signe distinctif de repérage (11) du système électronique, visible de l'extérieur de l'élément de construction et **caractérisé en ce que** la pièce support (2) comporte des évidements (10, 10a) la traversant de la face de réception (4) à sa face opposée (5).

2. Ensemble selon la revendication 1, **caractérisé en ce que** le système électronique est un système électronique émissif sans contact et à portée réduite comprenant en outre une antenne d'émission d'ondes radio.

3. Ensemble selon l'une des revendications 1 ou 2, **caractérisé en ce qu'**il comprend un dispositif de maintien destiné au positionnement temporaire de l'ensemble lors de la fabrication de l'élément de construction.

4. Ensemble selon l'une des revendications 1, 2 ou 3, dans lequel la face de réception (4) comporte au moins une surface d'appui (6) sur laquelle repose le système électronique (1) et en ce que ladite au moins une surface d'appui (6) est portée par une patte (7) faisant saillie de la face de réception (4) en comprenant un bord relevé (8) venant en butée contre une portion de la périphérie du système électronique (1).

5. Ensemble selon l'une quelconque des revendications précédentes, dans lequel l'élément de positionnement (3) est un élément de centrage sous la forme d'un doigt pénétrant dans un logement (3a) disposé au milieu du système électronique (1), un support auxiliaire (3b) sur lequel repose la face inférieure du système électronique émissif (1) étant prévu à la base du doigt.

6. Ensemble selon l'une quelconque des revendications précédentes, dans lequel la pièce support (2) présente au moins un élément d'ancrage (9) faisant saillie de la pièce support (2) et destiné à s'insérer à l'intérieur de l'élément de construction.

7. Ensemble selon l'une quelconque des revendications précédentes, dans lequel le système électronique (1) est une étiquette NFC ou étiquette radiofréquence de communication dans un champ proche

8. Ensemble selon l'une quelconque des revendications précédentes, **caractérisé en ce que** le système électronique (1) comporte un capteur.

9. Elément de construction à base d'une matière coulée ou moulée se solidifiant progressivement lors de sa fabrication, **caractérisé en ce qu'**il incorpore au moins un ensemble selon l'une quelconque des revendications précédentes, la face opposée (5) à la face de réception (4) dudit au moins un ensemble étant visible de l'extérieur de l'élément de construction.

10. Elément de construction selon la revendication 9, dans lequel la matière coulée ou moulée est choisie parmi les matières suivantes ou est un mélange des matières suivantes : béton de ciment avec ou sans ajout de matériau végétal, béton de résine, béton hydraulique, une résine, un plastique ou un mélange de plastiques.

11. Procédé de fabrication par moulage d'un élément de construction selon l'une quelconque des revendications 9 ou 10, comprenant les étapes suivantes :
- fourniture d'une pièce support (2) munie, sur une (4) de ses faces dite de réception du système électronique (1), d'un élément de positionnement (3) dudit système (1) et, à la face opposée (5) à ladite face de réception (4), d'un signe distinctif de repérage (11) du système électronique (1), ladite pièce support comportant des évidements (10, 10a) la traversant de la face de réception (4) à sa face opposée (5),
- positionnement du système électronique (1) sur la face de réception (4) de la pièce support (2),
- placement de l'ensemble pièce support (2) et système électronique (1) dans un moule correspondant à l'élément de construction, ceci sur une paroi du moule avec adhésion temporaire de l'ensemble sur la paroi par la face (5) de la pièce support (2) opposée à la face de réception (4) du système électronique (1),
- coulée de la matière de l'élément de construction dans le moule,
- démoulage de l'élément de construction avec détachement de la face opposée (5) de la pièce support (2) de la paroi du moule,
- les évidements (10, 10a) étant traversés et remplis par de la matière coulée formant l'élément de construction.

## Patentansprüche

1. Baugruppe, die dazu bestimmt ist, in ein verfestigtes Bauelement integriert zu werden, wobei die Baugruppe zum einen ein elektronisches System (1) umfasst, wobei das System (1) einen Chip umfasst, wobei die Baugruppe zum anderen ein Trägerteil (2) umfasst, das auf einer (4) seiner Seiten, die als Aufnahmeseite des Systems (1) bezeichnet wird, mit einem Element zum Positionieren (3) des Systems (1), und an der der Aufnahmeseite (4) gegenüberliegenden Seite (5) mit einem unverwechselbaren Markierungszeichen (11) des elektronischen Systems ausgestattet ist, das von der Außenseite des Bauelements her sichtbar ist, und **dadurch gekennzeichnet ist, dass** das Trägerteil (2) Aussparungen (10, 10a) umfasst, die von der Aufnahmeseite (4) her zu seiner gegenüberliegenden Seite (5) durch es hindurchgehen.

2. Baugruppe nach Anspruch 1, **dadurch gekennzeichnet, dass** es sich bei dem elektronischen System um ein kontaktloses elektronisches Sendesystem mit geringer Reichweite handelt, das weiter eine Sendeantenne für Funkwellen umfasst.

3. Baugruppe nach einem der Ansprüche 1 oder 2, **dadurch gekennzeichnet, dass** sie eine Haltevorrichtung umfasst, die zum vorübergehenden Positionieren der Baugruppe bei der Herstellung des Bauelements bestimmt ist.

4. Baugruppe nach einem der Ansprüche 1, 2 oder 3, wobei die Aufnahmeseite (4) mindestens eine Auflagefläche (6) umfasst, auf der das elektronische System (1) ruht, und dadurch, dass die mindestens eine Auflagefläche (6) von einem Ansatz (7) getragen wird, der von der Aufnahmeseite (4) vorspringt, indem er einen erhöhten Rand (8) umfasst, der an einem Abschnitt des Umfangs des elektronischen Systems (1) in Anlage geht.

5. Baugruppe nach einem der vorstehenden Ansprüche, wobei es sich bei dem Positionierungselement (3) um ein Zentrierelement in Form eines Stiftes handelt, der in eine in der Mitte des elektronischen Systems (1) angeordnete Aufnahme (3a) eindringt, wobei an der Basis des Stiftes ein zusätzlicher Träger (3b) vorgesehen ist, auf dem die Unterseite des elektronischen Sendesystems (1) ruht.

6. Baugruppe nach einem der vorstehenden Ansprüche, wobei das Trägerteil (2) mindestens ein Verankerungselement (9) aufweist, das vom Trägerteil (2) vorspringt und dazu bestimmt ist, in das Bauelement eingesetzt zu werden.

7. Baugruppe nach einem der vorstehenden Ansprüche, wobei es sich bei dem elektronischen System (1) um ein NFC-Etikett oder Funkfrequenzetikett zur Kommunikation im Nahfeld handelt.

8. Baugruppe nach einem der vorstehenden Ansprüche, **dadurch gekennzeichnet, dass** das elektronische System (1) einen Sensor umfasst.

9. Bauelement auf Basis eines gegossenen oder geformten Materials, das sich bei seiner Herstellung nach und nach verfestigt, **dadurch gekennzeichnet, dass** es mindestens eine Baugruppe nach einem der vorstehenden Ansprüche enthält, wobei die der Aufnahmeseite (4) gegenüberliegende Seite (5) der mindestens einen Baugruppe von der Außenseite des Bauelements her sichtbar ist.

10. Bauelement nach Anspruch 9, wobei das gegossene oder geformte Material aus den folgenden Materialien ausgewählt ist oder eine Mischung der folgenden Materialien ist: Zementbeton mit oder ohne Zusatz von Pflanzenmaterial, Harzbeton, hydraulischem Beton, einem Harz, einem Kunststoff oder einer Kunststoffmischung.

11. Verfahren zur Herstellung eines Bauelements nach einem der Ansprüche 9 oder 10 durch Formen, das die folgenden Schritte umfasst:
- Bereitstellen eines Trägerteils (2), das auf einer (4) seiner Seiten, die als Aufnahmeseite des elektronischen Systems (1) bezeichnet wird, mit einem Element zum Positionieren (3) des Systems (1), und an der der Aufnahmeseite (4) gegenüberliegenden Seite (5) mit einem unverwechselbaren Markierungszeichen (11) des elektronischen Systems (1) ausgestattet ist, wobei das Trägerteil Aussparungen (10, 10a) umfasst, die von der Aufnahmeseite (4) her zu seiner gegenüberliegenden Seite (5) durch es hindurchgehen,
- Positionieren des elektronischen Systems (1) auf der Aufnahmeseite (4) des Trägerteils (2),
- Platzieren der Baugruppe aus Trägerteil (2) und elektronischem System (1) in einer dem Bauelement entsprechenden Form, und zwar an einer Wand der Form unter vorübergehendem Anhaften der Baugruppe mit der der Aufnahmeseite (4) des elektronischen Systems (1) gegenüberliegenden Seite (5) des Trägerteils (2) an der Wand,
- Gießen des Materials des Bauelements in die Form,
- Ausformen des Bauelements unter Ablösen der gegenüberliegenden Seite (5) des Trägerteils (2) von der Wand der Form,
- wobei die Aussparungen (10, 10a) von gegossenem Material, das das Bauelement bildet, durchdrungen und ausgefüllt werden.

## Claims

1. A set intended to be incorporated into a solidified building element, said set comprising, on the one hand, an electronic system (1), said element (1) comprising a chip, said set comprising, on the other hand, a support part (2) provided, on one (4) of its faces so-called for receiving the system (1), with an element (3) for positioning said system (1), and, at the face opposite (5) to said receiving face (4), a distinctive marking sign (11) of the electronic system, visible from outside the building element and **characterised in that** the support part (2) includes recesses (10, 10a) crossing it from the receiving face (4) to its opposite face (5).

2. The set according to claim 1, **characterised in that** the electronic system is a contactless and short-range emissive electronic system further comprising a radiowave emitting antenna.

3. The set according to one of claims 1 or 2, **characterised in that** it comprises a holding device intended for temporary positioning of the set during manufacture of the building element.

4. The set according to one of claims 1, 2 or 3, wherein the receiving face (4) includes at least one bearing surface (6) over which rests the electronic system (1) and in that said at least one bearing surface (6) is carried by a leg (7) projecting from the receiving face (4) while comprising a raised edge (8) abutting against a portion of the periphery of the electronic system (1).

5. The set according to any one of the preceding claims, wherein the positioning element (3) is a centring element in the form of a finger penetrating into a housing (3a) disposed at the middle of the electronic system (1), an auxiliary support (3b) over which rests the lower face of the emissive electronic system (1) being provided at the base of the finger.

6. The set according to any one of the preceding claims, wherein the support part (2) has at least one anchoring element (9) projecting from the support part (2) and intended to be inserted inside the building element.

7. The set according to any one of the preceding claims, wherein the electronic system (1) is an NFC tag or a near-field radio-frequency communication tag.

8. The set according to any one of the preceding claims, **characterised in that** the electronic system (1) includes a sensor.

9. A building element based on a cast or moulded material solidifying progressively during manufacture thereof, **characterised in that** it incorporates at least one set according to any one of the preceding claims, the face opposite (5) to the receiving face (4) of said at least one set being visible from outside the building element.

10. The building element according to claim 9, wherein the cast or moulded material is selected from the following materials or is a mixture of the following materials: cement concrete with or without the addition of a plant material, resin concrete, hydraulic concrete, a resin, a plastic or a mixture of plastics.

11. A method for manufacturing by moulding a building element according to any one of claims 9 or 10, comprising the following steps:
- providing a support part (2) provided, on one (4) of its faces so-called for receiving the electronic system (1), with an element (3) for positioning said system (1), and, at the face opposite (5) to said receiving face (4), with a distinctive marking sign (11) of the electronic system (1), said support part (2) including recesses (10, 10a) crossing it from the receiving face (4) to its opposite face (5),
- positioning the electronic system (1) on the receiving face (4) of the support part (2),
- placing the support part (2) and electronic system (1) set in a mould corresponding to the building element, that being so on a wall of the mould with a temporary adhesion of the set on the wall by the face (5) of the support part (2) opposite to the face for receiving (4) the electronic system (1),
- casting the material of the building element in the mould,
- unmoulding the building element with detachment of the opposite face (5) of the support part (2) from the wall of the mould,
- the recesses (10, 10a) being crossed and filled by the cast material forming the building element.
